# EUROPEAN PATENT APPLICATION

(11) **EP 4 379 016 A1**
(43) Date of publication of application: **05.06.2024**
(21) Application number: 23848771.4
(22) Date of filing: 11.10.2023
(51) Int. Cl.: C09K 3/18, D21H 19/10, D21H 21/14

(54) **WATER REPELLENT OIL REPELLENT AGENT**

(30) Priority: 12.10.2022 JP 2022164285
(71) Applicant: DAIKIN INDUSTRIES, LTD., Osaka-shi, Osaka 530-0001 (JP)
(72) Inventor: MATSUDA, Michio, Osaka-shi, Osaka 530-0001 (JP); SAKASHITA, Hirotoshi, Osaka-shi, Osaka 530-0001 (JP); SHIBATA, Shun, Osaka-shi, Osaka 530-0001 (JP); UEHARA, Tetsuya, Osaka-shi, Osaka 530-0001 (JP)
(74) Representative: Hoffmann Eitle
(86) International application number: PCT/JP2023/036899
(87) International publication number: WO 2024/080310

(57) **Abstract**

A water- and oil-repellent agent comprising: a polysaccharide; and a sizing agent,
wherein the polysaccharide exhibits a viscosity of 60 cps or less at 50°C in a 20 mass% aqueous solution.

## Description

### Technical Field

The present disclosure relates to a water- and oil-repellent agent.

### Background Art

Food packaging materials and food containers made of paper are required to prevent penetration of moisture and oil from food. Accordingly, oil resistant agents are applied to paper to impart oil repellency to the paper (Patent Literatures 1 to 4).

### Citation List

### Patent Literature

Patent Literature 1: JPA 2006-307363
Patent Literature 2: JPA 2002-69889
Patent Literature 3: WO 2022/080464
Patent Literature 4: JPA 2022-103182

### Summary of Invention

### Technical Problem

An object of the present disclosure is to provide a water- and oil-repellent agent capable of imparting excellent water and oil repellencies to paper.

### Solution to Problem

The present disclosure includes the following embodiments.
<1> A water- and oil-repellent agent comprising: a polysaccharide; and a sizing agent,
   wherein the polysaccharide exhibits a viscosity of 60 cps or less at 50°C in a 20 mass% aqueous solution.
<2> The water- and oil-repellent agent according to the above <1>, wherein the polysaccharide is starch.
<3> The water- and oil-repellent agent according to the above <2>, wherein the starch is an hydrophobized modified starch.
<4> The water- and oil-repellent agent according to the above <3>, wherein the hydrophobized modified starch is an alkenylsuccinated starch.
<5> The water- and oil-repellent agent according to any one of the above <1> to <4>, wherein the sizing agent is an alkyl ketene dimer.
<6> The water- and oil-repellent agent according to any one of the above <1> to <5>, wherein the water- and oil-repellent agent has a viscosity of 300 cps or less at 50°C.
<7> The water- and oil-repellent agent according to any one of the above <1> to <6>, wherein an amount of the polysaccharide in the water- and oil-repellent agent is 40% by mass or less.
<8> The water- and oil-repellent agent according to any one of the above <1> to <7>, wherein an amount of the sizing agent in the water- and oil-repellent agent is 5% by mass or less.
<9> The water- and oil-repellent agent according to any one of the above <1> to <8>, wherein the amount of the sizing agent in the water- and oil-repellent agent is 10% by mass or less relative to the total mass of the polysaccharide and the sizing agent.
<10> The water- and oil-repellent agent according to any one of the above <1> to <9>, further comprising an additive.
<11> The water- and oil-repellent agent according to any one of the above <1> to <10>, wherein the water- and oil-repellent agent is used to treat a surface of paper.
<12> Water- and oil-repellent paper comprising: paper; and a water- and oil-repellent layer on a surface of the paper, the water- and oil-repellent layer being made of the water- and oil-repellent agent according to any one of the above <1> to <11>.
<13> The water- and oil-repellent paper according to the above <12>, wherein the water- and oil-repellent layer contains 6.0 g/m² or less of the water- and oil-repellent agent on a solid basis.
<14> A method for treating paper, comprising: treating paper with the water- and oil-repellent agent according to any one of the above <1> to <11> by external addition treatment.

### Advantageous Effects of Invention

The present disclosure can provide a water- and oil-repellent agent capable of imparting excellent water and oil repellencies to paper.

### Description of Embodiments

### <Water- and Oil-Repellent Agent>

The water- and oil-repellent agent of the present disclosure contains a polysaccharide and a sizing agent, and the polysaccharide exhibits a viscosity of 60 cps or less at 50°C in a 20 mass% aqueous solution.

When polysaccharide is added to a known oil resistant agent in a high concentration, the viscosity of the oil resistant agent increases, resulting in difficulty in stably applying the oil resistant agent to paper. In contrast, when the polysaccharide concentration is low in oil resistant agents, the oil resistance of the paper can be low.

The water- and oil-repellent agent of the present disclosure, which has features as described above, can impart excellent water and oil repellencies to paper. In particular, even when the polysaccharide is contained in a high concentration, the water- and oil-repellent agent can favorably treat paper to impart excellent water and oil repellencies to the paper.

The water- and oil-repellent agent of the present disclosure may contain a medium (for example, liquid medium, such as water or an organic solvent). Preferably, the water- and oil-repellent agent of the present disclosure may be an aqueous dispersion.

The water- and oil-repellent agent of the present disclosure contains a polysaccharide. The polysaccharide may consist of one of polysaccharides, or two or more thereof. The polysaccharide in the water- and oil-repellent agent can impart water and oil repellencies to paper.

The polysaccharide in the water- and oil-repellent agent of the present disclosure may be soluble in water or hydrophobic. The polysaccharide may be dissolved or partially dissolved in water to form an aqueous solution of the polysaccharide or a dispersion containing the polysaccharide. The aqueous solution or dispersion of the polysaccharide has a predetermined viscosity according to the amount of the polysaccharide in the aqueous solution or dispersion.

The term "aqueous solution" used hereinafter can encompass a form in which polysaccharide is partially dissolved in liquid without limiting to a form in which polysaccharide is completely dissolved in liquid. For example, the forms of the "aqueous solution" used herein include a dispersion in which polysaccharide is dispersed in a liquid and a suspension in which polysaccharide is suspended in a liquid.

The polysaccharide contained in the water- and oil-repellent agent of the present disclosure exhibits a viscosity of 60 cps or less at 50°C in a 20 mass% aqueous solution. The polysaccharide exhibiting such a viscosity is less likely to increase the viscosity of the water- and oil-repellent agent, even when it is contained in a high concentration. Consequently, the water- and oil-repellent agent containing the polysaccharide in a high concentration can be easily applied to paper to improve the water and oil repellencies of the paper.

From the viewpoint of facilitating the application of the water- and oil-repellent agent of the present disclosure to paper, the polysaccharide may preferably exhibit a viscosity of 55 cps or less at 50°C in a 20 mass% aqueous solution, more preferably 50 cps or less, still more preferably 45 cps or less, still further preferably 40 cps, and particularly preferably 30 cps.

From the viewpoint of improving the water and oil repellencies, the polysaccharide may exhibit a viscosity of 1 cps or more at 50°C in a 20 mass% aqueous solution, preferably 5 cps or more, and more preferably 10 cps or more.

From the viewpoint of facilitating the application of the water- and oil-repellent agent of the present disclosure to paper, the polysaccharide may exhibit a viscosity of 200 cps or less at 30°C in a 20 mass% aqueous solution. From the viewpoint of further improving the water and oil repellencies, the polysaccharide may preferably exhibit a viscosity of 150 cps or less at 30°C in a 20 mass% aqueous solution, more preferably 130 cps or less, and still more preferably 120 cps or less.

From the viewpoint of improving the water and oil repellencies, the polysaccharide may exhibit a viscosity of 1 cps or more at 30°C in a 20 mass% aqueous solution, preferably 10 cps or more, and more preferably 30 cps or more.

The viscosity of polysaccharide aqueous solutions is measured with a B-type rotational viscometer. In a measurement with a B-type rotational viscometer, for example, a No. 2 rotor may be used. The rotational speed may be set at 60 rpm.

The viscosity of the 20 mass% aqueous solution at 50°C may be controlled by, for example, controlling the molecular weight of the polysaccharide. More specifically, the viscosity of the 20 mass% aqueous solution at 50°C may be controlled by cleaving any of the glucosidic bonds of the polysaccharide. The glucosidic bond of the polysaccharide may be cleaved, for example, by acid treatment in a wet process, acid treatment in a dry process, heat treatment, or using a starch degrading enzyme, an oxidizing agent, or the like. Cleaving the glucosidic bonds of polysaccharide reduces the molecular weight of the polysaccharide, thereby reducing the viscosity of its 20 mass% aqueous solution at 50°C. Hence, a polysaccharide with a reduced viscosity can be obtained. Reducing the viscosity of polysaccharide may be conducted after treatment (modification) into the polysaccharide or before the treatment (modification).

The polysaccharide may be a compound formed by binding a plurality of (three or more, for example, 3 or more and 2,000 or less) monosaccharide molecules, such as glucose, galactose, and fructose. The polysaccharide may be an oligosaccharide in which 3 or more and 10 or less monosaccharide molecules are bound.

The polysaccharide may be an acidic, neutral, or basic polysaccharide. The acidic polysaccharide generally has a carboxy group (-COOH) and the like. Specific examples of the acidic polysaccharide include carrageenan, pectin, gum arabic, xanthan gum, gellan gum, agar, and tragacanth gum. The neutral polysaccharide is electrically neutral. Specific examples of the neutral polysaccharide include tamarind seed gum, guar gum, locust bean gum, starch, and pullulan. The basic polysaccharide has an amino group (-NH₂) and the like. Chitosan is a specific example of the basic polysaccharide.

Specific examples of the polysaccharide include xanthan gum, gum karaya, welan gum, guar gum, pectin, tamarind seed gum, carrageenan, chitosan, gum arabic, locust bean gum, cellulose and cellulose derivatives, such as carboxymethyl cellulose, hydroxyethyl cellulose, hydroxypropyl cellulose, and hydroxypropyl methyl cellulose, alginic acid, starch, agar, dextran, and pullulan. The polysaccharide may be substituted, particularly substituted at the hydroxy group.

From the viewpoint of improving the water and oil repellencies, the polysaccharide may be starch. The starch may be a vegetable starch. Examples of starch include rice flour starch, wheat starch, corn starch, potato starch, tapioca starch, sweet potato starch, red bean starch, mung bean starch, kudzu starch, and dogtooth violet starch.

The starch may be untreated or treated starch. In other words, the starch may be modified or unmodified. The starch may be modified by at least one of esterification, etherification, oxidation, alkaline denaturation, enzyme denaturation, bleaching, and other methods.

Examples of modified starches include acetylated distarch adipate, acetylated oxidized starch, acetylated distarch phosphate, alkenylsuccinated starch, starch acetate, oxidized starch, hydroxyalkylated starch, hydroxyalkylated distarch phosphate (for example, the alkyl group has 2 or more and 40 or less, or 2 or more and 10 or less carbon atoms, particularly 2 or 3 carbon atoms), distarch phosphate, monostarch phosphate, phosphated distarch phosphate, acid-modified starch, alkali-treated starch, enzyme-treated starch, bleached starch, cationic starch (e.g., quaternary ammonium starch), and alpha starch. Dextrin, which is produced from starch by chemically or enzymatically reducing the molecular weight, may also be used.

From the viewpoint of improving the water and oil repellencies, the starch may be an hydrophobized modified starch. The hydrophobized modified starch is modified (hydrophobized) so as to have a hydrophobic group (e.g., a hydrocarbon group having 1 to 40, 2 to 40, 3 to 30, or 4 to 20 carbon atoms). Examples of the hydrophobized modified starch include alkenylsuccinated starch, starch acetate, polyacrylonitrile-grafted starch, (meth)acrylic acid- or (meth)acrylate-grafted starch, and crosslinked starch. Examples of the (meth)acrylate include methyl (meth)acrylate, ethyl (meth)acrylate, and butyl (meth)acrylate. The crosslinked starch is produced by using a multifunctional (divalent to pentavalent) chemical, and examples of such a multifunctional chemical include phosphorus oxychloride and epichlorohydrin.

Examples of the hydrophobization process include: esterifying a raw material starch into alkenylsuccinated starch (or alkenylsuccinic acid-modified starch) using an alkenyl derivative of succinic acid (for example, the alkenyl group has 3 to 40, e.g., 5 to 30, or 6 to 24 carbon atoms, thereby forming, e.g., alkenylsuccinic anhydride, such as octenylsuccinic anhydride or dodecenylsuccinic anhydride); grafting a raw material starch with a hydrophobic monomer (for example, an unsaturated nitrile, such as acrylonitrile, or an acrylic monomer, such as an alkyl (meth)acrylate (the alkyl group has, for example, 1 to 30 carbon atoms)); reacting a raw material starch with an organosilane; and etherifying or esterifying a raw material starch to introduce a hydrophobic group including a hydrocarbon group (having, for example, 1 to 30 carbon atoms) to the starch. In a process for esterifying a raw material starch into a starch alkenylsccinate, the raw material starch may be reacted with an alkenyl derivative of succinic acid under a weak basic environment (e.g., pH 7.5 to 8.0). Examples of the raw material starch include natural starches, such as corn starch, rice flour starch, wheat starch, corn starch, potato starch, tapioca starch, and sweet potato starch.

The polysaccharide may be an alkenylsuccinated starch (e.g., starch octenylsuccinate or octenylsuccinic acid-modified starch) from the viewpoint of improving the water and oil repellencies. The alkenyl group of the alkenylsuccinated starchmay have 3 to 40 carbon atoms, for example, 5 to 30 or 6 to 24 carbon atoms. Specific examples of alkenylsuccinated starch include starch octenylsuccinate, starch decenylsuccinate, starch dodecenylsuccinate, starch tetradecenylsuccinate, starch hexadecenylsuccinate, and starch octadecenylsuccinate. Preferably, the alkenylsuccinated starch is starch octenylsuccinate or octenylsuccinic acid-modified starch from the viewpoint of further improving the water and oil repellencies. For example, starch sodium octenylsuccinate may be preferred. The esterification degree of an esterified starch can be represented by the degree of substitution (DS, the moles of the substituent per 1 mol of anhydrous glucose moiety), and the DS may be 0.005 to 0.3 or 0.01 to 0.2.

The hydrophobized modified starch has a hydrophobic group (for example, a hydrocarbon group having 1 to 40, 2 to 40, or 3 to 30 carbon atoms) and, preferably, may also have a hydrophilic group (e.g., a hydroxy group, an amino group, a carboxy group, or an oxyalkylene group (having 1 to 3, particularly 1 or 2, carbon atoms)). The presence of hydrophobic and hydrophilic groups may increase the water and oil repellencies.

The polysaccharide content of the water- and oil-repellent agent of the present disclosure may be 40% by mass or less, preferably 35% by mass or less, more preferably 30% by mass or less, still more preferably 25% by mass, and still further preferably 20% by mass or less.

The polysaccharide content of the water- and oil-repellent agent of the present disclosure may be 1% by mass or more, preferably 3% by mass or more, more preferably 5% by mass or more, still more preferably 7% by mass or more, still further preferably 10% by mass or more, and particularly preferably 15% by mass or more.

The water- and oil-repellent agent of the present disclosure contains a sizing agent. The sizing agent in the water- and oil-repellent agent increases the water and oil repellencies of the water- and oil-repellent agent. Commercially available sizing agents may be used as the sizing agent in the water- and oil-repellent agent of the present disclosure.

Examples of the sizing agent include sizing agents based on olefin, rosin, acrylics, polyacrylamide, styrene-maleic acid, acrylic copolymer, acrylic emulsion, olefin-maleic acid resin, urethane, AKD (alkyl ketene dimer), ASA (alkenylsuccinic anhydride), and petroleum resin. The ionicity of the sizing agent may be cationic, anionic, or nonionic. From the viewpoint of improving the water and oil repellencies, the sizing agent may be an alkyl ketene dimer.

The alkyl ketene dimer may be a compound represented, for example, by the following formula: 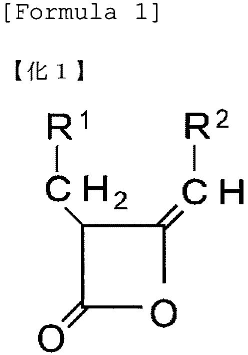 wherein R¹ represents an alkyl or alkenyl group; and R² represents an alkyl or alkenyl group.

From the viewpoint of improving the water and oil repellencies, R¹ and R² may be each independently an alkyl or alkenyl group having 4 to 32 carbon atoms, preferably 8 to 28 carbon atoms, more preferably 12 to 24 carbon atoms, and still more preferably 14 to 24 carbon atoms.

The sizing agent content of the water- and oil-repellent agent of the present disclosure may be 5% by mass or less, preferably 0.1% to 5% by mass, more preferably 0.3% to 3% by mass, and still more preferably 0.5% to 1% by mass.

The amount of the sizing agent in the water- and oil-repellent agent of the present disclosure may be 10% by mass or less, preferably 1% to 10% by mass, more preferably 1% to 8% by mass, still more preferably 2% to 5% by mass, relative to the total mass of the polysaccharide and the sizing agent of the water- and oil-repellent agent.

The viscosity of the water- and oil-repellent agent may be 300 cps or less at 50°C. The water- and oil-repellent agent of the present disclosure having such a viscosity is easily applied to paper. From the viewpoint of further facilitating the application of the water- and oil-repellent agent of the present disclosure to paper, the viscosity at 50°C of the water- and oil-repellent agent of the present disclosure may preferably be 1 cps to 300 cps, more preferably 30 cps to 250 cps, and still more preferably 50 cps to 200 cps.

The water- and oil-repellent agent of the present disclosure may further contain an additive or additives. Such additives may include a pH adjusting agent, a paper strengthening agent, a yield improver, a coloring agent (dye or pigment), a fluorescent coloring agent, a slime control agent, an anti-slip agent, and an antifoaming agent.

### <Uses>

The water- and oil-repellent agent according to the present disclosure may be used as an external treatment agent (surface-treating agent) or an internal treatment agent. The products obtained through treatment with the water- and oil-repellent agent have high water repellency and/or oil repellency. Therefore, the water- and oil-repellent agent is used as a water repellent agent and/or an oil repellent agent. Additionally, the water- and oil-repellent agent can be used as a soil resistant agent, an oil resistant agent, a soil release agent, a stripping agent, a release agent, or a constituent of those agents.

### <Water- and Oil-Repellent Paper>

The water- and oil-repellent agent of the present disclosure can be used to treat paper (for example, for surface treatment). Hence, the water- and oil-repellent agent of the present disclosure may be for treating the surface of paper. Treating paper with the water- and oil-repellent agent of the present disclosure can provide water- and oil-repellent paper.

The water- and oil-repellent agent may be used for paper by known methods. For example, internal addition treatment to add the water- and oil-repellent agent of the present disclosure to pulp slurry before paper making or external addition treatment to apply the water- and oil-repellent agent of the present disclosure to paper after paper making may be used.

Preferably, the water- and oil-repellent agent of the present disclosure is used in the external addition treatment. The external addition treatment may be performed using a size press, a coater (e.g., gate roll coater, Bill blade coater, bar coater, etc.), a spray machine, or the like. Alternatively, the water- and oil-repellent agent may be dispersed in an organic solvent or water for dilution and applied to the surface of the object to be treated by a known method, such as dipping, spray coating, or foam application, followed by drying.

Depending on the application method, size presses used for the external addition treatment may be classified as follows. In an embodiment of the application method, what is called a two-roll pond size press is used in such a manner that a coating liquid (namely sizing liquid) is fed to the nip portion formed when a paper sheet is passed between two rubber rolls to form a pool of the coating liquid, called a pond, and the paper sheet is passed through the pool to apply the sizing liquid to both sides of the paper sheet. In the other application methods, a gate roll coater for applying the sizing liquid by surface transfer or a rod metering size press is used. The two-roll pond size press allows the sizing liquid to penetrate easily into the paper, and the surface transfer easily retain the sizing liquid on the surface of the paper. The surface transfer is more likely than the two-roll pond size press to retain the coating layer on the surface of the paper, forming a larger amount of water- and oil-repellent layer on the surface than the two-roll pond size press. The present disclosure can impart water and oil repellencies to paper even when the former two-roll pond size press is used. The paper thus treated is lightly dried at room temperature or a high temperature and then optionally heat-treated in a range up to 300°C depending on the nature of the paper, for example, up to 200°C, particularly 80°C or more and 180°C or less, to have excellent water and oil repellencies.

In the method of the present disclosure for treating paper, the water- and oil-repellent agent may be externally added to paper in an on-machine process. That is, the processes of paper making and coating may be integrated (in other words, performed in a series). For example, in the method of the present disclosure for treating paper, the paper raw material slurry may be fed to the wire part of a paper making machine to be dewatered, further pressed at the press part, and passed through the dryer part to be dried, thus obtaining base paper to be coated. The base paper to be coated is subsequently passed through the coater head to apply the water- and oil-repellent agent and then through the dryer part for drying.

The water- and oil-repellent agent of the present disclosure may be used for plasterboard base paper, coated base paper, medium quality paper, general linerboard and corrugating medium, neutral pure white roll paper, neutral linerboard, rustproof linerboard and metal interleaving paper, kraft paper, and the like. Additionally, the water- and oil-repellent agent may also be used for neutral printing and writing paper, neutral coated base paper, neutral PPC paper, neutral thermal paper, neutral pressure-sensitive base paper, neutral inkjet paper, and neutral information paper.

The paper treated with the water- and oil-repellent agent of the present disclosure may be a paper-made container, a molded paper product (e.g., a molded pulp), or other paper-made objects. For example, the paper may preferably be a food packaging material or a food container. The paper is manufactured by a known paper making process.

Raw material pulps of paper include bleached or unbleached chemical pulps such as kraft pulp and sulfite pulp; bleached or unbleached high-yield pulps such as crushed wood pulp, mechanical pulp, and thermomechanical pulp; and pulp recycled from wastepaper such as newspaper, magazines, cardboard, and deinked paper, and any of these pulps may be used. Mixtures of such raw material pulp with asbestos or synthetic fibers, such as polyamide, polyimide, polyester, polyolefin, and polyvinyl alcohol, may also be used.

A sizing agent may be added to enhance the water resistance of the paper. The sizing agent may be, for example, a cationic sizing agent, an anionic sizing agent, or a rosin-based sizing agent (e.g., acid rosin-based sizing agent, neutral rosin-based sizing agent). The sizing agent may be used in an amount of 0.01% by mass or more and 5% by mass or less relative to the pulp.

To the paper may be added, if necessary, additives used in paper manufacture as paper-making chemicals to a generally used extent, such as paper strengthening agents such as carboxymethylcellulose and polyamide polyamine-epichlorohydrin resin, flocculants, fixing agents, yield improvers, dyes, fluorescent dyes, slime control agents, and antifoaming agents. The water- and oil-repellent agent may be applied to paper with a size press, a gate roll coater, a Bill blade coater, a calender, or the like if necessary, using polyvinyl alcohol, glucose, dyes, coating colors, anti-slip agents, or other additives. Preferably, polyvinyl alcohol or glucose is used as an additive. Combined use of polyvinyl alcohol or glucose with polysaccharide increases the water and oil repellencies. The amount of polyvinyl alcohol used as a paper making-chemical may be 1 or more and 1000 or less parts by mass, 2 or more and 200 or less parts by mass, 3 or more and 100 or less parts by mass, or 5 or more and 50 or less parts by mass, relative to 100 parts by mass of polysaccharide, and particularly it may be 10 or more and 40 or less parts by mass.

The water- and oil-repellent paper of the present disclosure includes a water- and oil-repellent layer made of the water- and oil-repellent agent of the present disclosure on a surface of the paper. The polysaccharide content of the water- and oil-repellent layer may be 6.0 g/m² or less, preferably 0.02 g/m² or more and 6.0 g/m² or less, more preferably 0.2 g/m² or more and 5.0 g/m² or less, still more preferably 0.5 g/m² or more and 4.0 g/m² or less, and particularly preferably 1.0 g/m² or more and 3.0 g/m² or less. The water- and oil-repellent agent content of the water- and oil-repellent layer may be the same as the solid content of the water- and oil-repellent agent (for example, the sum of the polysaccharide content and sizing agent content of the water- and oil-repellent agent).

For external addition, the amount of the sizing agent in the water- and oil-repellent layer may be 0.01 g/m² or more and 2.0 g/m² or less, preferably 0.01 g/m² or more and 1.5 g/m² or less, more preferably 0.03 g/m² or more and 1.3 g/m² or less, and particularly preferably 0.05 g/m² or more and 1.0 g/m² or less.

The water- and oil-repellent paper of the present disclosure may have an air permeance of, for example, 1,000 s or more or 2,000 s or more, particularly 3,000 s or more. The air permeance is measured in accordance with JIS P 8117 (2009). The higher the air permeance, the higher the gas barrier property and the less likely the paper is to penetrate moisture (including water vapor) as well as oxygen and other gases.

### Examples

Although the water- and oil-repellent agent of the present disclosure will be described in Examples, the present disclosure is not limited to the following Examples.

The test methods used below are as follows:

### Viscosity Measurement

Viscosity was measured with a B-type viscometer. Viscosity was measured at a rotational speed of 60 rpm and a temperature of 50°C, using a No. 2 rotor. A digital viscometer manufactured by Blookfield was used as the B-type viscometer.

### Oil Resistance Test (Practical Oil test)

Water- and oil-repellent papers with about 0.1 g of commercially available olive oil dropped were placed in a 70°C oven and removed after 7 minutes, and the degree of staining with oil was observed.
The degree of staining on the back side was rated by number as below.
5: 0% to 5%
4: 6% to 20%
3: 21% to 50%
2: 51% to 75%
1: 76% to 100%

### Water Absorptiveness (Cobb Value) Evaluation

Water absorptiveness (Cobb value) was measured in accordance with JIS P 8140: 1998.

A paper substrate was placed on the surface of a hard base plate with a smoothly finished surface, and a metal cylinder with an inner diameter of 112.8 mm was clamped to the surface of the paper substrate. Then, water was poured into the cylinder to a depth of 10 mm. The weight of the water absorbed for 1 minute from when water came into contact with the paper substrate was measured. The measured value was converted to weight per square meter (gsm), that is, the water absorptiveness (Cobb value).

### Air Permeance

Paper was formed into a container, and the air permeance (air resistance) at the bottom of the container was measured with a Gurley-type automatic densometer (model No. 323-AUTO, aeration diameter: 28.6 mm ± 0.1 mm) manufactured by Yasuda Seiki Seisakusho Ltd., in accordance with JIS P 8117 (2009).

### Viscosity Measurement of 20 mass% Aqueous Solution of Polysaccharide

A predetermined amount of octenylsuccinic acid-modified starch-1 was dissolved in water to prepare a 20 mass% aqueous solution of the octenylsuccinic acid-modified starch. The viscosity of this aqueous solution was measured. Also, 20 mass% aqueous solutions of octenylsuccinic acid-modified starch-2 and octenylsuccinic acid-modified starch-3 were prepared, and their viscosities were measured. The viscosities of those solutions are presented in Table 1.

**[Table 1]**

| Polysaccharide | Viscosity of 20 mass% aqueous solution at 50°C (cps) |
|---|---|
| Octenylsuccinic acid-modified starch-1 | 47 |
| Octenylsuccinic acid-modified starch-2 | 25 |
| Octenylsuccinic acid-modified starch-3 | 390 |

### [Example 1]

### (Preparation of Base Paper)

A pulp slurry with a pulp freeness (Canadian Standard Freeness) of 400 mL was prepared using LBKP (bleached hardwood kraft pulp) and NBKP (needle bleached kraft pulp) as wood pulp in proportions by mass of 60% by mass and 40% by mass, respectively. The resulting pulp slurry was mixed with 0.5% by mass of a wet paper strengthening agent in terms of solid content relative to dry pulp, and a paper with a paper density of 0.58 g/cm³ and a basis weight of 48 g/m² was produced as a base paper for external addition treatment (size press treatment), using a fourdrinier machine. The oil resistance (practical oil test) of the base paper was 1. The water absorptiveness (Cobb value) of the base paper was 65. The air permeance of the base paper was 250 s.

### (Production of Octenylsuccinic Acid-Modified Starch)

Into a flask containing 400 parts of water, 20 parts of corn starch was added in small quantities at 25°C with strong stirring, and then dilute hydrochloric acid was added with stirring until the pH reached 4 or less.
The resulting aqueous solution was dried to a water percentage of 7% or less at about 70°C to 90°C and then roasted to a predetermined viscosity at 160°C, thus preparing a low-viscosity corn starch.
Into a flask containing 120 parts of water, 100 parts of the resulting low-viscosity corn starch was added in small quantities with stirring, and the pH was neutralized with 2% sodium hydroxide aqueous solution. Subsequently, 4 parts of octenylsuccinic anhydride was added while the pH was kept at 7.5 to 8.0, and the resulting mixture was reacted at about 30°C to 40°C for 5 hours.
After the reaction, the mixture was neutralized with dilute sulfuric acid and then rinsed several times with 300 parts of water.
The resulting solid was dried and finely crushed to yield starch sodium octenylsuccinate as the octenylsuccinic acid-modified starch. The period of time of the roasting at 160°C was adjusted to obtain starch sodium octenylsuccinates 1 to 3 having desired different viscosities.

### (Production of Water- and Oil-Repellent Paper)

The water- and oil-repellent agent was adjusted so as to contain 20% by mass of the octenylsuccinic acid-modified starch-1 and 0.5% by mass of an alkyl ketene dimer and used for treatment with a size press. The treated paper was dried with a drum dryer to yield water- and oil-repellent paper (treated paper). The viscosity of the water- and oil-repellent agent was 60 cps. The total coated amount of the octenylsuccinic acid-modified starch-1 and the alkyl ketene dimer contained in the resulting water- and oil-repellent paper was 3.2 g/m² on a solid basis. The resulting water- and oil-repellent paper was used as a test paper for oil resistance test (practical oil test), water absorptiveness (Cobb value) evaluation, and air permeance evaluation. Evaluation results are presented in Table 2. The size press treatment mentioned here (using a size press manufactured by Mathis AG) refers to what is called a two-roll pond size press treatment, in which base paper is passed through the water- and oil-repellent agent pooled between rolls at a desired roll speed and nip pressure.

### [Example 2]

The treatment was performed in the same manner as in Example 1, except that the alkyl ketene dimer was adjusted to 1.0% by mass. The total coated amount of the octenylsuccinic acid-modified starch-1 and the alkyl ketene dimer contained in the resulting water- and oil-repellent paper was 3.5 g/m² on a solid basis. The viscosity of the water- and oil-repellent agent was 108 cps. Evaluation results are presented in Table 2.

### [Example 3]

The treatment was performed in the same manner as in Example 1, except that the octenylsuccinic acid-modified starch-2 was used. The total coated amount of the octenylsuccinic acid-modified starch-2 and the alkyl ketene dimer contained in the resulting water- and oil-repellent paper was 3.2 g/m² on a solid basis. The viscosity of the water- and oil-repellent agent was 58 cps. Evaluation results are presented in Table 2.

### [Example 4]

The treatment was performed in the same manner as in Example 1, except that the octenylsuccinic acid-modified starch-2 and the alkyl ketene dimer were adjusted to 20% by mass and 1.0% by mass, respectively. The total coated amount of the octenylsuccinic acid-modified starch-2 and the alkyl ketene dimer contained in the resulting water- and oil-repellent paper was 3.4 g/m² on a solid basis. The viscosity of the water- and oil-repellent agent was 91 cps. Evaluation results are presented in Table 2.

### [Comparative Example 1]

The treatment was performed in the same manner as in Example 1, except that the octenylsuccinic acid-modified starch-3 was used. The viscosity of the water- and oil-repellent agent was 390 cps. The water- and oil-repellent agent exhibited so high a viscosity that the paper could not be treated with the water- and oil-repellent agent. Evaluation results are presented in Table 2.

### [Comparative Example 2]

The treatment was performed in the same manner as in Example 1, except that no alkyl ketene dimer was used. The viscosity of the water- and oil-repellent agent was 45 cps. The solid amount of the octenylsuccinic acid-modified starch-1 contained in the resulting water- and oil-repellent paper was 3.2 g/m². Evaluation results are presented in Table 2.

**[Table 2]**

| | Water- and oil-repellent agent | | | | | | | Amount of application to paper | Evaluation | | |
|---|---|---|---|---|---|---|---|---|---|---|---|
| | Octenylsuccinic acid-modified starch-1 (mass%) | Octenylsuccinic acid-modified starch-2 (mass%) | Octenylsucci nic acid-modified starch-3 (mass%) | Alkyl ketene dimer (mass%) | Total (mass%) | Viscosity (cps) 50°C | Proportion (%) of alkyl ketene dimer to starch | Total | Practical oil test | Cobb⁶⁰ | Air permeance |
| | | | | | | | | gsm | | gsm | s |
| Example 1 | 20 | | | 1 0.5 | 20.5 | 60 | 2.4 | 3.2 | 4 | 23 | 2196 |
| Example 2 | 20 | | | 1 | 21 | 108 | 5 | 3.5 | 4 | 20 | 4950 |
| Example 3 | | 20 | | 0.5 | 20.5 | 58 | 2.4 | 3.2 | 4 | 23 | 6600 |
| Example 4 | | 20 | | 1 | 21 | 91 | 5 | 3.4 | 4 | 20 | 12000 |
| Comparative Example 1 | | | 20 | 0.5 | 20.5 | 390 | 0 | N/A | | | |
| Comparative Example 2 | 20 | | | | 20 | 45 | 0 | 3.2 | 1 | 36 | 3500 |

The results presented above show that the water- and oil-repellent agent of the present disclosure can impart excellent water and oil repellencies to paper.

### Industrial Applicability

The water- and oil-repellent agent of the present disclosure can be applied to paper used for food containers and food packaging materials.

## Claims

1. A water- and oil-repellent agent comprising: a polysaccharide; and a sizing agent,
wherein the polysaccharide exhibits a viscosity of 60 cps or less at 50°C in a 20 mass% aqueous solution.

2. The water- and oil-repellent agent according to claim 1, wherein the polysaccharide is starch.

3. The water- and oil-repellent agent according to claim 2, wherein the starch is an hydrophobized modified starch.

4. The water- and oil-repellent agent according to claim 3, wherein the hydrophobized modified starch is an alkenylsuccinated starch.

5. The water- and oil-repellent agent according to any one of claims 1 to 4, wherein the sizing agent is an alkyl ketene dimer.

6. The water- and oil-repellent agent according to any one of claims 1 to 5, wherein the water- and oil-repellent agent has a viscosity of 300 cps or less at 50°C.

7. The water- and oil-repellent agent according to any one of claims 1 to 6, wherein an amount of the polysaccharide in the water- and oil-repellent agent is 40% by mass or less.

8. The water- and oil-repellent agent according to any one of claims 1 to 7, wherein an amount of the sizing agent in the water- and oil-repellent agent is 5% by mass or less.

9. The water- and oil-repellent agent according to any one of claims 1 to 8, wherein the amount of the sizing agent in the water- and oil-repellent agent is 10% by mass or less relative to the total mass of the polysaccharide and the sizing agent.

10. The water- and oil-repellent agent according to any one of claims 1 to 9, further comprising an additive.

11. The water- and oil-repellent agent according to any one of claims 1 to 10, wherein the water- and oil-repellent agent is used to treat a surface of paper.

12. Water- and oil-repellent paper comprising: paper; and a water- and oil-repellent layer on a surface of the paper, the water- and oil-repellent layer being formed of the water- and oil-repellent agent according to any one of claims 1 to 11.

13. The water- and oil-repellent paper according to claim 12, wherein the water- and oil-repellent layer contains 6.0 g/m² or less of the water- and oil-repellent agent on a solid basis.

14. A method for treating paper, comprising: treating paper with the water- and oil-repellent agent according to any one of claims 1 to 11 by external addition treatment.
